# EUROPEAN PATENT SPECIFICATION

(11) **EP 1 649 607 B1**
(45) Date of publication and mention of the grant of the patent: **06.05.2009**
(21) Application number: 04743940.1
(22) Date of filing: 12.07.2004
(51) Int. Cl.: H04B 1/707

(54) **A method for correlating a sampled direct sequence spread spectrum signal with a locally provided replica**
Verfahren zum korrelieren eines abgetasteten Direktsequenz-Spreizspektrumsignal mit einem Lokal bereitgestellten Duplikat
Procédé pour corréler un signal échantillonne à spectre étale en sequence directe avec un signal de réplique fourni localement

(30) Priority: 16.07.2003 GB 0316608
(43) Date of publication of application: 26.04.2006
(73) Proprietor: NXP B.V., 5656 AG Eindhoven (NL)
(72) Inventor: DOOLEY, Saul R. Philips Intellectual, Redhill, Surrey RH1 5HA (GB); YULE, Andrew T. Philips Intellectual, Redhill, Surrey RH1 5HA (GB)
(74) Representative: Williamson, Paul Lewis
(86) International application number: PCT/IB2004/002278
(87) International publication number: WO 2005/008909

(56) References cited:
- EP-A- 1 387 500
- WO-A-20/04025858
- US-A1- 2001 048 713
- PHILIP MATTOS: "GPS 5: the software engine" ELECTRONICS WORLD, 1 April 1993 (1993-04-01), pages 296-304, XP000356001 Swanley, Kent, England

## Description

This invention relates to a method of correlating a sampled direct sequence spread spectrum signal with a locally provided replica signal containing a spreading code; and to a corresponding signal processor, receiver, computer-readable storage medium and computer program for the same.

It is well known to provide a NAVSTAR GPS receiver in which received GPS spread spectrum signals are repeatedly correlated with locally generated replica signals containing spreading codes in order to despread the received GPS signals. As the spread spectrum codes in received GPS signals are likely to have a different code phase to those of the replica signals and also a different frequency due to Doppler shift between the receiver and orbiting satellites, a two dimensional replica code phase and frequency phase sweep is normally employed whereby such a sweep will eventually result in the spread spectrum codes in received GPS signals having the same frequency and code phase as those of the locally generated replica. This will result in a positive correlation, indicating acquisition, and the code phase and frequency of the GPS signals may be subsequently tracked and pseudorange and other information derived from the GPS signals from which the position of the receiver may be calculated using conventional navigation algorithms.

Virtually all current GPS receivers use application specific hardware to perform GPS signal acquisition, however, more recently, there has been development of software based GPS. For example, article "Real-time software radio architectures for GPS receivers" by Akos et al. (GPS World, July 2001) discloses GPS software receivers in which the GPS signal processing is accomplished by means of a programmable micro-processor or digital signal processor as opposed to analogue or discrete hardwires components. As

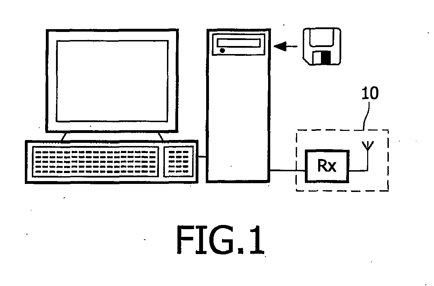

illustrated in figure 2 of this article, a simplified "GPS software receiver" is provided consisting of a GPS antenna and GPS RF front-end section for GPS signal preprocessing (including filtering, amplification and frequency down-conversion) and analogue to digital conversion. The GPS signal samples outputted from the GPS RF front-end section can be fed in to a modem PC running appropriate GPS signal processing software to determine a position fix. The main disadvantage with software based GPS signal processing is that it is inherently slower than corresponding hardwired solutions.

*Prior art document* US 2001/0048713 A1 discloses an initial acquisition and search device for a spread spectrum communication system, in which multiple correlation calculations and threshold evaluations are performed in parallel. The correlation calculations are performed on a chip-by-chip basis.

*Prior art article "*GPS 5: the software engine" by Philip Mattos, Electronics World & Wireless World, no 1685, 1 April 1993, pages 296 to 304*, refers to the reduction of a spread-spectrum signal to a single carrier by means of software and discloses a correlating method according to the preamble of claim 1.*

In accordance with the present invention, there is provided a method of correlating a sampled direct sequence spread spectrum signal as defined in claim 1. The invention also provides a signal processor configured to perform the correlation method of the invention.

The processing includes a word based exclusive-or (XOR) operation or its inverse and may include a summation of the results of that operation. Also, the first word may be formed by execution of a software based instruction.

With each sample of the spread spectrum signal containing a magnitude bit and a sign bit, the first word is formed by combining the magnitude bits of at least two signal samples, a third word is formed by combining the sign bits of at least two signal samples and one or more software based instructions is executed to process the first, second and third words in order to obtain a correlation value, *wherein said word based operations include processing the third word as a 1 bit value and performing an XOR operation between the third word and the second word, whereafter the first word is used as a mask in the bit count operation.*

With the present invention, the inventors have appreciated that most microprocessors are able to carry out fast, word based, hard-wired operations such as XOR operations using appropriate software hooks, and use of these operations can significantly speed up spread spectrum signal acquisition.

The present invention will now be described, by way of example only, with reference to the accompanying figure which shows, schematically, a PC connected to a NAVSTAR GPS receiver device and operating in accordance with the present invention.

Referring to the accompanying figure, the PC is connected via a USB PC port and corresponding cable to the GPS receiver device 10 which consists of a GPS RF front-end section Rx and a GPS antenna. Whilst the device could have been a "dongle" type device thereby omitting the cable, the cable facilitates positioning of the GPS receiver device (including the antenna) in a prominent position, thereby increasing the chances of acquiring GPS signals. For example, one might place the GPS receiver device near a window if operating in doors.

When operative, the GPS receiver device receives NAVSTAR SPS GPS signals (which are direct sequence spread spectrum signals) through its antenna and pre-process them, typically by passive bandpass filtering in order to minimise out-of-band RF interference, preamplification, down conversion to an intermediate frequency (IF) and analogue to digital conversion. The resultant 1-bit GPS signal samples contain the IF signal which remains modulated, still containing all the information from the available satellites. The GPS signal samples are then outputted from the GPS receiver device via the USB link into PC memory (not shown).

Using appropriate GPS signal processing software according to the present invention, the GPS signal samples are processed as further described below so that GPS signals may acquired for the purpose of deriving pseudorange information from which the position of the PC can be determined using conventional navigation algorithms.

If we first consider conventional GPS signal acquisition in software: for a 1-bit stream of GPS IF signal samples, a correlation is typically done by using XOR operations applied to each bit of the GPS IF stream with a corresponding bit of both in-phase (I) and quadrature (Q) 1-bit bits of GPS replica signals (replicating the spreading code as modulated on both an I and Q phase IF carrier). For both I and Q phases, the XOR operation outputs are summed and the sums combined to produce a correlation output which is used to determine whether the signal has been acquired or not. It may help to consider this process in terms of the following pseudo-code which is repeated for each bit of the IF sample stream to generate the respective sums for the I and Q phases:

```
             code = GenerateNextCodeBit()
             carrier = GenerateNextCarrierPhase()
             IFsample = GetNextIFsample()
             Isum = Isum + IFsample XOR (code XOR cos(carrier))
             Qsum = Qsum + IFsample XOR (code XOR sin(carrier))
```

Note, a more sophisticated arrangement may be used if a complex GPS IF signal sample stream is used, but the principles are much the same.

In accordance with the present invention, for a 1-bit stream of GPS IF signal samples, consecutive 32 bit groups are combined to form consecutive words of the GPS IF signal sample stream which then have an XOR operation applied to them with a corresponding 32 bit words of both I and Q phase GPS replica signals. The XOR operation is performed in hardware pursuant to a software based instruction, e.g. on an ARM9 microprocessor which naturally operates on 32 bit words. For both I and Q phases, the word based, XOR operation outputs are summed and the sums combined to produce a correlation output which is used to determine whether the signal has been acquired or not.

If we compare the word based processing of the present invention with conventional bit based processing, there is an effective reduction in the number of XOR operations by a factor of 32 for the cost of having to carry out two bit counts and some simple packing operations. This in itself is worthwhile but in addition, in most practical software solutions, the IF data will be stored in packed words. Therefore, not only does the generation of the packed word have no cost, but the an unpacking cost needed if the conventional bit based processing from word based IF method is avoided.

It may help to consider this process in terms of the following pseudo-code which would which is repeated for each word of the IF sample stream generated in order to generate the respective sums for the I and Q phases:

```
       for bit = 0 to 31 {
       codeword[bit] = GenerateCodeBit()
       phase = GenerateCarrierPhase()
       IcarrierWord[bit] = cos(phase)
       QcarrierWord[bit] = sin(phase)
       IFWord[bit]= GetNextIFsample()
       }
       IWord = IFWord XOR codeWord XOR IcarrierWord
       QWord = IFWord XOR codeWord XOR QcarrierWord
       Isum = Isum + CountBitsSet(IWord)
       Qsum = Qsum + CountBitsSet(QWord)
```

It is worth noting that variants of this approach could be used for multibit sampling, although the gains may be less. The specific case of 1.5 bit sampling (i.e. values of 1, 0, and -1) could clearly be supported by having separate sign and magnitude words and processing the sign word as a 1 bit value, but using magnitude word as a mask in the bit count operation.

The present invention has been illustrated in the context of a PC with software GPS capability, however, it is of course equally applicable to other apparatus able to support GPS signal processing software, and to which a GPS receiver device according to the present invention can be connected. For example, the invention may be employed with mobile devices such as laptop PCs, and PDAs; or generally stationary objects such as a TVs or TV set-top boxes. Furthermore, the invention is equally applicable to non-GPS direct sequence spread spectrum signal acquisition including when employed for mobile telephony.

## Claims

1. A method of correlating a sampled direct sequence spread spectrum signal with a locally provided replica signal containing a spreading code, comprising the steps of:
- grouping the bits of at least two signal samples of the received signal to form a first word,
- providing a second word containing bits corresponding to the replica signal,
**characterized in that**
- each sample of the spread spectrum signal contains a magnitude bit *of either 0 or 1* and a sign bit,
- the first word is formed by combining the magnitude bits of the at least two signal samples,
- a third word is formed by combining the sign bits of the at least two signal samples, and
- one or more software based instructions are executed to process the first, second and third words using word based operations in order to obtain a correlation value, *wherein said word based operations include processing the third word as a 1 bit value and performing an XOR operation between the third word and the second word, whereafter the first word is used as a mask in the bit count operation.*

2. *The* method according to claim 1 wherein a software based instruction is executed to form the first word.

3. A signal processor configured for correlating a sampled direct sequence spread spectrum signal with a locally provided replica signal containing a spreading code, comprising processing means adapted to:
- group the bits of at least two signal samples of the received signal to form a first word; and
- provide a second word containing bits corresponding to the replica signal,
**characterized in that**
- each sample of the spread spectrum signal contains a magnitude bit *of either 0 or 1* and a sign bit, and
- the processing means is further adapted to
- form the first word by combining the magnitude bits of the at least two signal samples,
- form a third word by combining the sign bits of the at least two signal samples; and
- to execute one or more software based instructions to process the first, second and third words using word based operations in order to obtain a correlation value, *wherein said word based operations include processing the third word as a 1 bit value and performing an XOR operation between the third word and the second word, whereafter the first word is used as a mask in the bit count operation.*

4. The signal processor according to claim 4 wherein a software based instruction is executed to form the first word.

5. A direct sequence spread spectrum signal receiver comprising an antenna and an RF front-end including an analogue to digital converter for receiving spread spectrum signals and outputting corresponding signal samples; and a signal processor according to claim 3 or 4.

## Patentansprüche

1. Ein Verfahren zum Korrelieren eines abgetasteten Direktsequenz-Spreizspektrumsignals mit einem lokal bereitgestellten Duplikatsignal, das einen Spreizcode enthält, das folgende Schritte umfasst:
- Gruppieren der Bits von mindestens zwei Signalabtastwerten des empfangenen Signals, so dass ein erstes Wort ausgebildet wird,
- Bereitstellen eines zweiten Worts, das Bits enthält, die dem Duplikatsignal entsprechen,
**dadurch gekennzeichnet, dass**
- jeder Abtastwert des Spreizspektrumsignals ein Größenbit von entweder 0 oder 1 und ein Vorzeichenbit enthält,
- das erste Wort durch Kombinieren der Größenbits der mindestens zwei Signalabtastwerte ausgebildet wird,
- ein drittes Wort durch Kombinieren der Vorzeichenbits der mindestens zwei Signalabtastwerte ausgebildet wird und
- ein oder mehrere softwarebasierte(r) Befehl(e) ausgeführt wird/werden, um das erste, zweite und dritte Wort unter Verwendung von wortbasierten Operationen zu verarbeiten, um einen Korrelationswert zu erhalten, wobei die wortbasierten Operationen die Verarbeitung des dritten Worts als 1-Bit-Wert und die Ausführung einer XOR-Operation zwischen dem dritten Wort und dem zweiten Wort einschließen, wonach das erste Wort als Maske bei der Bitzähloperation verwendet wird.

2. Das Verfahren nach Anspruch 1, wobei ein softwarebasierter Befehl ausgeführt wird, um das erste Wort auszubilden.

3. Ein Signalprozessor, der zum Korrelieren eines abgetasteten Direktsequenz-Spreizspektrumsignals mit einem lokal bereitgestellten Duplikatsignal, das einen Spreizcode enthält, konfiguriert ist, der Verarbeitungsmittel umfasst, die so angepasst sind, dass sie:
- die Bits von mindestens zwei Signalabtastwerten des empfangenen Signals so gruppieren, dass ein erstes Wort ausgebildet wird, und
- ein zweites Wort bereitstellen, das Bits enthält, die dem Duplikatsignal entsprechen,
**dadurch gekennzeichnet, dass**
- jeder Abtastwert des Spreizspektrumsignals ein Größenbit von entweder 0 oder 1 und ein Vorzeichenbit enthält und
- die Verarbeitungsmittel ferner so angepasst sind, dass sie
- das erste Wort durch Kombinieren der Größenbits der mindestens zwei Signalabtastwerte ausbilden,
- ein drittes Wort durch Kombinieren der Vorzeichenbits der mindestens zwei Signalabtastwerte ausbilden,
- einen oder mehrere softwarebasierte(n) Befehl(e) ausführen, um das erste, zweite und dritte Wort unter Verwendung von wortbasierten Operationen zu verarbeiten, um einen Korrelationswert zu erhalten, wobei die wortbasierten Operationen die Verarbeitung des dritten Worts als 1-Bit-Wert und die Ausführung einer XOR-Operation zwischen dem dritten Wort und dem zweiten Wort einschließen, wonach das erste Wort als Maske bei der Bitzähloperation verwendet wird.

4. Der Signalprozessor nach Anspruch 4, wobei ein softwarebasierter Befehl ausgeführt wird, um das erste Wort auszubilden.

5. Ein Direktsequenz-Spreizspektrumsignal-Empfänger, der eine Antenne und ein HF-Frontend einschließlich eines Analog-Digital-Wandlers zum Empfangen von Spreizspektrumsignalen und Ausgeben entsprechender Signalabtastwerte und einen Signalprozessor nach Anspruch 3 oder 4 umfasst.

## Revendications

1. Procédé de corrélation d'un signal à étalement de spectre à séquence directe échantillonné avec un signal de réplique fourni localement contenant un code d'étalement, comprenant les étapes consistant :
- à grouper les bits d'au moins deux échantillons de signal du signal reçu pour fournir un premier mot,
- à fournir un deuxième mot contenant les bits correspondants au signal de réplique,
**caractérisé par le fait que**
- chaque échantillon du signal à étalement de spectre contient un bit d'amplitude égal soit à 0 soit à 1, et un bit de signe,
- le premier mot est formé en combinant les bits d'amplitude d'au moins deux échantillons de signal,
- un troisième mot est formé en combinant les bits de signe d'au moins deux échantillons de signal, et
- une ou plusieurs instructions logicielles sont exécutées pour traiter le premier, le deuxième et le troisième mot en utilisant des opérations fondées sur des mots pour obtenir une valeur de corrélation, dans lequel lesdites opérations fondées sur des mots comprennent le traitement du troisième mot en tant que valeur à 1 bit et la réalisation d'une opération OU exclusif (XOR) entre le troisième mot et le deuxième mot, après quoi le premier mot est utilisé comme masque dans l'opération de comptage de bits.

2. Procédé selon la revendication 1, dans lequel une instruction logicielle est exécutée pour former le premier mot.

3. Processeur de signal configuré pour corréler un signal à étalement de spectre à séquence directe échantillonné avec un signal de réplique fourni localement contenant un code d'étalement, comprenant des moyens de traitement agencés de manière :
- à grouper les bits d'au moins deux échantillons de signal du signal reçu pour fournir un premier mot ; et
- à fournir un deuxième mot contenant les bits correspondants au signal de réplique,
**caractérisé par le fait que**
- chaque échantillon du signal à étalement de spectre contient un bit d'amplitude égal soit à 0 soit à 1, et un bit de signe,
- les moyens de traitement étant en outre agencés de manière
- à former le premier mot en combinant les bits d'amplitude d'au moins deux échantillons de signal,
- à former un troisième mot en combinant les bits de signe d'au moins deux échantillons de signal ; et
- à exécuter une ou plusieurs instructions logicielles pour traiter le premier, le deuxième et le troisième mot en utilisant des opérations fondées sur des mots pour obtenir une valeur de corrélation, dans lequel lesdites opérations fondées sur des mots comprennent le traitement du troisième mot en tant que valeur à 1 bit et la réalisation d'une opération OU exclusif (XOR) entre le troisième mot et le deuxième mot, après quoi le premier mot est utilisé comme masque dans l'opération de comptage de bits.

4. Processeur de signal selon la revendication 4, dans lequel une instruction logicielle est exécutée pour former le premier mot.

5. Récepteur de signal à étalement de spectre à séquence directe comprenant une antenne et un étage d'entrée RF comprenant un convertisseur analogique-numérique pour recevoir des signaux à étalement de spectre et à fournir en sortie des échantillons de signal correspondants ; et un processeur de signal selon l'une des revendications 3 ou 4.
